Europäisches Patentamt

European Patent Office

Office européen des brevets

(11) Publication number: **0 166 138**
**B1**

# EUROPEAN PATENT SPECIFICATION

(45) Date of publication of patent specification: **23.01.91**

(51) Int. Cl.⁵: **G 02 B 6/44**

(21) Application number: **85105676.2**

(22) Date of filing: **11.05.85**

(54) Improvements to submarine optical fibres cables for telecommunications.

(30) Priority: **29.05.84 IT 2115884**

(43) Date of publication of application:
**02.01.86 Bulletin 86/01**

(45) Publication of the grant of the patent:
**23.01.91 Bulletin 91/04**

(84) Designated Contracting States:
**DE FR GB SE**

(56) References cited:
**EP-A-0 029 198**
**FR-A-2 444 282**
**GB-A-2 017 968**
**GB-A-2 029 048**
**GB-A-2 064 811**

(73) Proprietor: **SOCIETA CAVI PIRELLI S.p.A.**
**Piazzale Cadorna, 5**
**I-20123 Milan (IT)**

(72) Inventor: **Occhini, Elio**
**Via Orio Vergani, 13**
**Milan (IT)**
Inventor: **Bianchi, Giuseppe**
**Via Cappellini, 20**
**Milan (IT)**

(74) Representative: **Giannesi, Pier Giovanni et al**
**Pirelli S.p.A. Direzione Brevetti Piazzale**
**Cadorna, 5**
**I-20123 Milano (IT)**

Courier Press, Leamington Spa, England.

# Description

The present invention concerns an optical fibre submarine cable, in particular a submarine cable for sea floors.

By submarine cables for sea floors is intended here a cable that is specially, but not exclusively, apt for being laid down at very deep sea floor levels — of about 8000 meters and even over.

As already known to the experts, a cable of this type has to be able to tolerate the various strains occurring both during the cable laying operation as well as during cable exercise.

During the laying operations, what are particularly critical are the variable traction forces along the cable which diminish with the depth that the cable must be subjected to, and to which must also be added a variable radial pressure of the surrounding water, that tends to squeeze the cable.

On the layed cable the main applied force is the hydrostatic pressure — due exclusively to the pressure of the surrounding water, that tends to press down upon the cable.

In the field there have already been realized structures that, while attempting to totally release the optical fibres from the traction strains, attempt at the same time to give to the assembly a stable configuration — even in the presence of considerable hydrostatic forces, due to the depth of the laid cable.

One method foresees, for example, a watertight, central tubular member disposed around the optical core. By optical core is intended here the assembly of the optical fibres and any of their eventual supports or cladding, taping, etc.

Generally speaking, the tubular element is realized out of a metal that results as being easy to work (for example: aluminum, copper, or alloys of the same).

The tubular member can be formed through extrusion, but even better by having an aluminum tube made with a longitudinal tape that is folded and welded.

Both these techniques — of extruding and of welding, require the application of heat. Hence, it is necessary to thermally protect the underlying optical core with protective layers. However, this unduly thickens the cable itself, whilst rendering it hardly manageable as well as cumbersome.

Therefore, it was considered preferable to create, over the optical core, a tubular member — that did not require any use of heat.

One solution, described in the French patent application 2444282, is represented by the use of a helicoidally wound assembly of elongated elements. All these elongated elements which are in direct reciprocal contact have a transverse cross-section approximating to a sector of an annulus and are of steel or steel wires, for offering a good resistance both against radial pressure and against the traction stress applied during the cable laying.

Drawbacks of the cable described in this French patent application is the difficulty of working it due to the reciprocal direct contact existing between all the elongated elements forming the tubular body which surrounds the optical core.

The same drawback is present by the cable described in the UK patent application 2017968 since even in it the tubular body which surrounds the optical core is formed by elongated elements having each cross-section approximating a sector of annulus in direct reciprocal contact.

Another known cable provides, around the tubular member which surrounds the optical core, traction resistant elements, consisting of one or more layers of steel wires having a circular section, wound helicoidally.

The steel wires have, by their very nature, a greater hardness than that of the metal constituting the underlying elongated elements having a cross-section approximating a sector of an annulus and when they are subjected to strong tractions they tend to spread over the former and to deform them along their contacting lines, thus originating permanent cuts. These cuts, as is quite evident, weaken the structure of the tubular member that is thus prevented from reacting elastically to the applied stresses. Hence, there results a lengthening of the cable that is such as to be able to prove critical for the optical fibres.

Moreover, the wires with a circular section, form numerous void spaces between the various layers — the said void spaces contributing favourably towards the deformability of the structure under radial pressure.

The presence of said void spaces also contributes towards further thickening the cable — with the negative consequence of making it barely manageable, as explained hereabove.

The present invention aims at creating an improved submarine cable having an optical core which is easy to work, and that obviates the above said drawbacks, whilst permitting its structure to remain undeformed, and to continue to act as an elastic body and to assume, at a parity with the resistant section, a lesser encumbrance than that found in known cables.

More precisely, the object of the present invention is a submarine telecommunication optical cable comprising an optical core comprising one or more optical fibres, lodged inside a central tubular member constituted by elongated metallic elements, each of which has a transverse cross section approximating a sector of an annulus, said central tubular member being surrounded by metal straps to form at least one layer with this latter being surrounded by at least one watertight conductive sheath and by at least one insulating sheath, whereby the metal straps are traction resistant and have a quadrangular transverse cross- section, with their radial sides being smaller with respect to the other two opposite sides characterized in that the metal straps are helically wound around the central tubular member, each metal strap being circumferentially spaced apart from the adjacent ones by spacings.

The figures in the attached drawings illustrate, solely by way of non-limiting example, a known cable and a practical mode of realizing the invention. More precisely:

Figure 1 shows a transverse cross-section of a known optical fibre cable used for telecommunications.

Figure 2 shows a transverse cross-section of an optical fibre cable for telecommunications, according to the invention.

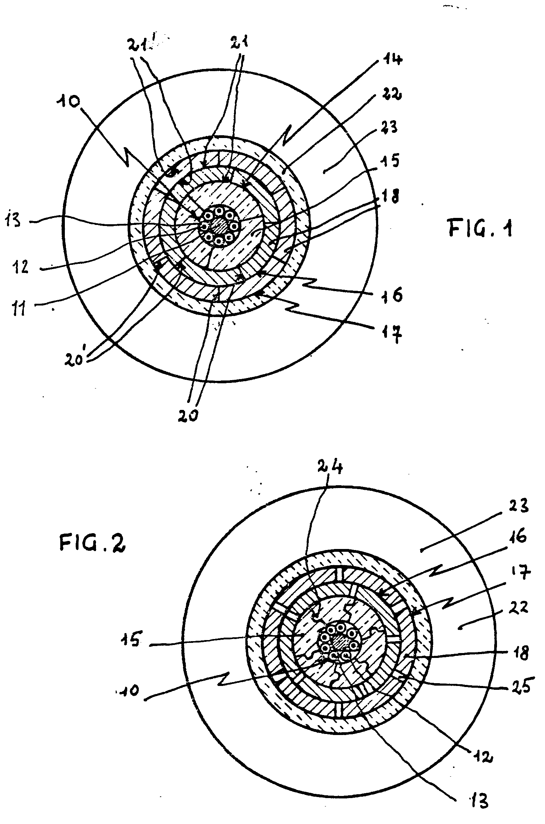

In FIG. 1, there is illustrated the transverse cross-section of a known submarine cable with optical fibres, to be layed on deep sea floors.

Said submarine cable comprises an optical core 10, consisting of a plurality of optical fibres 12 having an adherent thermoplastic covering 13. The optical fibres 12 are wound around a wire 11 which is preferably, but not necessarily metallic, that has the purpose of functioning as a traction member.

The optical core 10 is contained inside a central tubular member 14, constituted by a layer of elongated metallic elements 15 having transverse cross-sections approximating to a sector of an annulus — that henceforth, in this text, shall be referred to simply as "segmental wires" 15.

Two layers 16 and 17, of helicoidally wound traction resistant or mechanically resistant elements 18, surround the central pressure resistant tubular member 14.

The mechanically resistant elements 18 have a quadrangular shaped transverse cross-section, with the pair of opposite sides 20, 20', that are directed radially to the cable, being smaller with respect to the other pair of sides 21, 21'.

For simplicity sake, the traction resistant elements 18 will henceforth, in this text, be referred to as "metal straps".

For preference, the metal straps 18 will be shaped in such a way as to better fit the cylindrical form of the underlying central tubular member 14. A preferred shape of the metal straps is that of the segmental wires 15.

The metal straps 18 of a same layer, are wound helicoidally in such a way that the adjacent metal straps lie next to one another and in direct reciprocal contact.

This allows for the reciprocal collaboration of the metal straps with each other, for supporting the radial thrust caused by both the hydrostatic pressure as well as by any pull at the cable, exercised during the laying operation.

The outer layer 17 of metal straps, is surrounded by a watertight sheath 22. This latter is preferably made out of a material having a good electrical conductivity for consenting to send the necessary direct current through it for feeding the transmitters.

Amongst the materials endowed with a good electrical conductivity, aluminum and its alloys are preferred because of their lightweight.

The conductor sheath 22 can be obtained by means of extrusion, or else, as an alternative, by longitudinally folding a tape and butt-welding its edges.

The watertight conductive sheath 22 is covered with at least one sheath 23 that is made, for example, of an extruded thermoplastic material such as polyethylene, polypropylene, or some other material that carries out the same function.

Instead, in FIG. 2 there is shown a cable according to the invention wherein, around an optical core 10 (constructed as in FIG. 1), there is disposed a central tubular member 14 — comprising a number of segmental wires 15 that is outside the preferred interval of from three to five.

More precisely, the segmental wires 15 shown in FIG. 2, by way on example, are six in number.

To ensure the indeformability of the central tubular member 14 subjected to radial thrusts that stress the segmental wires 15, they are provided with connecting and anti-sliding means, with respect to the adjacent segmental wires. These connecting means (see reference numeral 24) could be, for example, formed by the profile present on one flank of each segmental wire 15, that is such as to mate with an opportune slot, present on the flank next to it, of the adjacent segmental wire.

The metal straps 18 of a same layer 16 (17) are helicoidally wound in such a way that the circumferentially adjacent metal straps 18 result spaced apart from each other.

The spacing 25 between a metal strap 18 and the metal strap adjacent to it allows for an easier working of the cable, with still allowing for a safe laying of the cable at considerable depths.

Preferably, the spacing 25 between two metal straps 18 of a same layer 16 (17) results as being offset with respect to the spacing between the two corresponding adjacent metal straps of the layer either above or below.

The width of the metal strap consents for distributing the forces acting on them, both those of traction during their stretching, and those acting radially owing to the hydrostatic pressure, along underlying surfaces which are extended sufficiently enough for allowing a reliable elastic response of the cable structure.

Preferably, the interstices existing between the elongated elements 15 of the central tubular member 14, those in the cavity within this latter for housing the optical core 10, and those between the metal straps and both above and below the same, are filled with a water blocking filler. This has the purpose of preventing any longitudinal migration of water that might penetrate due to any eventual leakage in the watertight conductor sheath itself.

A filler could be of the grease type (for example: a silicone grease) but it can also be a material which tends to swell in the presence of water, and which is capable, in this manner, of creating a barrier against the water progression.

In a further preferred embodiment, the filler could also be constituted by a substance that in itself combines filling and lubricating properties — such as an organic oil that allows for improving the sliding when any pulling occurs between the metal straps 18 themselves, or with respect to the segmental wires 15, with thus contributing not negligibly towards improving the flexibility of the cable.

In both the figures of the drawings, there are shown submarine cables wherein, for simplicity sake, the optical core 10 has been indicated as consisting of a metallic rod 11 that is surrounded by a plurality of optical fibres 12, whereby each optical fibre 12 is enclosed in an adherent sheath 13. It must nevertheless be understood that the optical core can be realized in any whatsoever other opportune way.

For example, it could comprise optical fibres that are loosely enclosed in a plastic sheath, with or without fillers.

Again, it could comprise a helicoidally grooved resistant element, whose grooves house optical fibres that are bare, or else enclosed, loosely or tightly, in a sheath.

## Claims

1. Submarine telecommunication optical cable comprising an optical core (10) comprising one or more optical fibres (12), lodged inside a central tubular member (14) constituted by elongated metallic elements (15), each of which has a transverse cross section approximating a sector of an annulus, said central tubular member (14) being surrounded by metal straps (18) to form at least one layer (16, 17) with this latter being surrounded by at least one watertight conductive sheath (22) and by at least one insulating sheath (23), whereby the metal straps (18) are traction resistant and have a quadrangular transverse cross-section, with their radial sides (20, 20') being smaller with respect to the other two opposite sides (21, 21') characterized in that the metal straps (18) are helically wound around the central tubular member (14), each metal strap (18) being circumferentially spaced apart from the adjacent ones by spacings (25).

2. Submarine optical cable for telecommunications, according to claim 1, characterized by the fact that said cable comprises a plurality of layers (16, 17) of said metal straps (18), and that the spacings (25) between adjacent metal straps (18) of a same layer are offset with respect to the spacings between corresponding adjacent metal straps (18) of the layer that is located immediately above or below.

3. Submarine optical cable for telecommunication, according to claim 1 or claim 2, characterized by the fact that said central tubular member (14) comprises in number from three to five elongated metallic elements (15) having transverse cross-sections approximating to a sector of an annulus.

4. Submarine optical cable for telecommunications, according to claim 1 or claim 2, characterized by the fact that said central tubular member (14) comprises a number of elongated metallic elements (15) having transverse cross-sections approximating to a sector of an annulus, which is outside the interval of from three to five, each said elongate metallic element (15) being provided with means for connecting it to the adjacent metallic elements.

5. Submarine optical cable for telecommunications, according to claim 4, characterized by the fact that said connecting means consist of a profile, present on one of its radial flanks, that is apt for mating with a corresponding slot provided on the facing radial flank of the adjacent metallic element.

6. Submarine optical cable for telecommunications, according to any of the previous claims, characterized by the fact that the interstices that are present respectively between the elongated metallic elements (15) of the central tubular member (14) inside the cavity housing the optical fibers and outside the latter, as well as between the metal straps (18) and also above and below these same, are filled with a water blocking filler.

7. Submarine optical cable for telecommunications, according to claim 6, characterized by the fact that said filler is a silicone grease.

8. Submarine optical cable for telecommunications, according to claim 6, characterized by the fact that said filler is a material that swells in presence of water.

9. Submarine optical cable for telecommunications, according to claim 6, characterized by the fact that said filler is an organic oil that also has lubricating properties.

## Patentansprüche

1. Unterwasserglasfasernachrichtenkabel, umfassend einen optischen Kern (10), der eine oder mehrere optische Fasern (12) umfaßt und auf der Innenseite eines mittleren rohrförmigen Teiles (14) aufgenommen ist, der durch längliche Metallelemente (15) dargestellt ist, deren jedes einen Querschnitt hat, der sich einem Sektor eines Kreises annähert, wobei der mittlere rohrförmige Teil (14) von Metallstreifen bzw. Metallbändern (18) umgeben ist, um wenigstens eine Lage (16, 17) zu bilden, die von wenigstens einem wasserdichten leitenden Mantel (22) und wenigstens einem Isoliermantel (23) umgeben ist, die Metallbänder (18) gegen Zugbeanspruchung widerstandsfähig sind und einen viereckigen Querschnitt haben, wobei ihre radialen Seiten (20, 20°) kleiner sind als die anderen beiden gegenüberliegenden Seiten (21, 21'), dadurch gekennzeichnet, daß die Metallbänder (18) um den mittleren rohrförmigen Teil (14) schraubenlinienförmig gewickelt sind und jedes Metallband (18) auf dem Umfang in einem Abstand (25) von den benachbarten Metallbändern liegt.

2. Unterwasserglasfasernachrichtenkabel nach Anspruch 1, dadurch gekennzeichnet, daß das Kabel eine Mehrzahl von Lagen (16, 17) aus den Metallbändern (18) umfaßt und daß die Abstände (25) zwischen benachbarten Metallbändern (18) der gleichen Lage mit Bezug auf die Abstände zwischen entsprechenden benachbarten Metallbändern (18) derjenigen Lage versetzt sind, die unmittelbar über oder unter der zuerst genannten Lage liegt.

3. Unterwasserglasfasernachrichtenkabel nach Anspruch 1 und 2, dadurch gekennzeichnet, daß der mittlere rohrförmige Teil (14) drei bis fünf längliche Metallelemente (15) umfaßt, die einen Querschnitt haben, der sich einem Sektor eines Kreises annähert.

4. Unterwasserglasfasernachrichtenkabel nach Anspruch 1 oder 2, dadurch gekennzeichnet, daß der mittlere rohrförmige Teil (14) eine Anzahl von länglichen Metallelementen (15) hat, die einen Querschnitt haben, der sich einem Sektor eines Kreises annähert, die außerhalb des Bereiches von drei bis fünf liegt, und jedes längliche Metallelement (15) mit Mitteln zu seinem Verbinden mit benachbarten Metallelementen versehen ist.

5. Unterwasserglasfasernachrichtenkabel nach Anspruch 4, dadurch gekennzeichnet, daß die Verbindungsmittel aus einem Profil bestehen, welches an einer der radialen Flanken des Elementes vorhanden ist und mit einem entsprechenden Schlitz zusammenpassen kann, der an der gegenüberliegenden radialen Flanke des benachbarten Metallelementes vorgesehen ist.

6. Unterwasserglasfasernachrichtenkabel nach irgendeinem der vorhergehenden Ansprüche, dadurch gekennzeichnet, daß die Zwischenräume, die jeweils zwischen den länglichen Metallelementen (15) des mittleren rohrförmigen Teils, im Inneren des die optischen Fasern aufnehmenden Hohlraums und auf der Außenseite dieses Hohlraums sowie zwischen den Metallbändern (18) und weiterhin über und unter den Metallbändern vorhanden sind, mit einem Wasserblockierungsfüller gefüllt sind.

7. Unterwasserglasfasernachrichtenkabel nach Anspruch 6, dadurch gekennzeichnet, daß der Füller ein Silikonfett ist.

8. Unterwasserglasfasernachrichtenkabel nach Anspruch 6, dadurch gekennzeichnet, daß der Füller ein Material ist, welches in Gegenwart von Wasser quillt.

9. Unterwasserglasfasernachrichtenkabel nach Anspruch 6, dadurch gekennzeichnet, daß der Füller ein organisches Öl ist, welches auch Schmiereigenschaften hat.

**Revendications**

1. Câble optique sous-marin pour télécommunications comprenant un noyau optique (10) comprenant une ou plusieurs fibres optiques (12), logées à l'intérieur d'un organe tubulaire central (14) constitué par des éléments métalliques allongés (15), dont chacun possède une section transversale constituant approximativement un secteur d'un anneau, ledit organe tubulaire central (14) étant entouré par des bandes métalliques (18) pour former au moins une couche (16, 17), cette dernière étant entourée par au moins une gaine conductrice étanche à l'eau (22), et par au moins une gaine isolante (23), grâce à quoi les bandes métalliques (18) sont résistantes à la traction et possèdent une section transversale rectangulaire, leurs côtés radiaux (20, 20') étant plus petits que les deux autres côtés opposés (21, 21'), caractérisé en ce que les bandes métalliques (18) sont enroulées en hélice autour de l'organe tubulaire central (14), chaque bande métallique (18) étant circonférentiellement espacée des bandes adjacentes par des entretoises (25).

2. Câble optique sous-marin pour télécommunications selon la revendication 1, caractérisé par le fait que ledit câble comprend plusieurs couches (16, 17) desdites bandes métalliques (18), et en ce que les entretoises (25) entre les bandes métalliques adjacentes (18) d'une même couche sont décalées par rapport aux entretoises entre des bandes métalliques adjacentes correspondantes (18) de la couche qui est située immédiatement au-dessus ou au-dessous.

3. Câble optique sous-marin pour télécommunications selon la revendication 1 ou la revendication 2, caractérisé par le fait que ledit organe tubulaire central (14) comprend un nombre de trois à cinq éléments métalliques (15) dont les sections transversales sont à peu près des secteurs d'un anneau.

4. Câble optique sous-marin pour télécommunications selon la revendication 1 ou la revendication 2, caractérisé par le fait que ledit organe tubulaire central (14) comprend un nombre d'éléments métalliques allongés (15) possédant des sections transversales de forme voisine d'un secteur d'anneau, qui est situé à l'extérieur de l'intervalle de trois à cinq, chaque élément métallique allongé (15) comportant des moyens pour le relier aux éléments métalliques adjacents.

5. Câble optique sous-marin pour télécommunications selon la revendication 4, caractérisé par le fait que lesdits moyens de liaison consistent en un profil, présent sur l'un de ses flancs radiaux, qui est apte à être introduit dans une fente correspondante ménagée sur le flanc radial opposé de l'élément métallique adjacent.

6. Câble optique sous-marin pour télécommunications selon l'une quelconque des revendications précédentes, caractérisé par le fait que les interstices qui sont respectivement présents, entre les éléments métalliques allongés de l'organe tubulaire central (14), à l'intérieur de la cavité logeant les fibres optiques et à l'extérieur de celle-ci, ainsi qu'entre les bandes métalliques (18) et aussi au-dessus et au-dessous de celle-ci, sont remplis d'une charge bloquant l'eau.

7. Câble optique sous-marin pour télécommunications selon la revendication 6, caractérisé par le fait que ladite charge est une graisse de silicone.

8. Câble optique sous-marin pour télécommunications selon la revendication 6, caractérisé par le fait que ladite charge est une matière qui gonfle en présence d'eau.

9. Câble optique sous-marin pour télécommunications selon la revendication 6, caractérisé par le fait que ladite charge est une huile organique qui possède aussi des propriétés lubrifiantes.

EP 0 166 138 B1

FIG. 1

FIG. 2